# EUROPEAN PATENT APPLICATION

(11) **EP 4 316 887 A1**
(43) Date of publication of application: **07.02.2024**
(21) Application number: 22188758.1
(22) Date of filing: 04.08.2022
(51) Int. Cl.: B60K 15/04

(54) **CAP FOR FUEL TANKS OF VEHICLE**

(71) Applicant: F.A.R.M.A. S.r.l. Fabbrica Accessori Ricambi Moto e Auto, 40059 Frazione Fossatone-Medicinia (BO) (IT)
(72) Inventor: POMA, Armando, 40060 DOZZA BO (IT)
(74) Representative: Modiano, Micaela Nadia

(57) **Abstract**

A cap for fuel tanks of vehicles, which is configured for the coupling thereof, in a respective active arrangement, to a filler neck (A) of a vehicle.

The cap comprises at least:
- a metallic flange (2), which is provided with means (3) for anchoring to the filler neck (A) and which defines a hole (4) configured for the passage of a nozzle (B) of a fuel pump,
- a flap (5) which is elastically articulated to the flange (2) and is normally arranged so as to close the hole (4),
in addition, at least one ridge (7) extends from a first face (2a) of the flange (2) directed toward the flap (5), and extends along an ideal closed curve around the hole (4) and is configured for contact with the flap (5), in the active arrangement.

## Description

The present invention relates to a cap for fuel tanks of vehicles.

As is well known, in motor vehicles, access to the fuel tank is controlled by a cap, normally arranged so as to close a first end portion of the filler neck, a long tube that, at its other end, leads to the tank.

In order to be able to carry out the refueling, according to methods that are known per se, it is usually necessary to temporarily disengage the cap from the filler neck, in order to then insert the nozzle of the fuel pump into the mentioned end portion of the filler neck, which for this purpose faces outward.

Likewise known is a different type of cap (sometimes referred to as an "automatic cap"), with which the refueling can and must occur without providing for its disengagement from the filler neck.

In fact, in this latter implementation solution the cap has at least a kind of disk, which is anchored to the end portion of the filler neck and is provided with a through hole that is closed elastically by a flap, articulated to the disk. In order to carry out the refueling, the user simply needs to push the flap with the nozzle of the fuel pump, forcing its temporary rotation inward in order to allow the nozzle to be introduced into the filler neck, through the hole, and carry out the refueling.

This implementation solution is however not devoid of drawbacks.

When the flap is arranged so as to close the hole, the outer rim of the former is resting on the portion of the surface of the disk that delimits the latter: leaks are avoided only if the surfaces in contact with each other are perfectly flat and only if this condition is met it is possible to ensure the hermetic closure of the hole by the flap.

By contrast, the step of anchoring the disk to the filler neck entails the tightening of screws, which produce stresses which often cause deformations of the disk itself that are such as to compromise the flatness, and therefore the seal, of the coupling. The risk of deformations is even more accentuated when it is considered that typically the disk is made by molding of polymeric material (for reasons of low cost and the ability to confer the chosen shape thereon): this material, owing to its poor mechanical properties, in terms of rigidity in particular, is particularly sensitive to stresses, such as in fact the stresses that arise during the step of anchoring to the filler neck.

Another obstacle to the production of caps that are capable of ensuring the hermetic seal of the hole is the difficulties encountered in adhering to the design dimensions: in fact, small errors in flatness or in the heights of the components involved (which often cannot be eliminated in the molding processes with which they are normally produced) are sufficient to compromise the seal of the coupling.

Moreover, it must be noted that the strict safety regulations that need to be met by components made for the vehicle sector impose further functionalities on fuel tank caps.

In fact they must be provided with valve apparatuses that are capable of effectively compensating for any differences in pressure that should arise between the tank and the outside environment.

Often such assemblies are at least partially anchored to the disk made of polymeric material, which however, owing to its low rigidity and modest mechanical strength, is often found to be inadequate to offer the necessary support to the assemblies, with the risk, once again, of deformations and malfunctions.

The aim of the present invention is to solve the above mentioned problems, by providing a cap for fuel tanks of vehicles, of the automatic type, i.e. provided with a flap that is normally arranged so as to close a hole defined in a first component which is anchored to the filler neck, which is capable of ensuring the hermetic seal of the hole proper.

Within this aim, an object of the invention is to provide an automatic cap that presents adequate properties of mechanical stiffness, in order to effectively prevent any deformations of its components involved in closing the hole.

Another object of the invention is to provide an automatic cap that ensures an optimal closure of the passage hole for the nozzle of the fuel pump, even in the event of dimensional deviations of the components involved from the design values.

Another object of the invention is to provide a cap that is provided with an effective valve assembly.

Another object of the invention is to provide a cap that is versatile, can be easily configured according to the specific requirements of ventilation of the tank, and ensures a high reliability of operation.

Another object of the invention is to provide a cap that adopts an alternative technical and structural architecture to those of conventional caps.

Another object of the invention is to provide a cap that is of low cost and safely applied.

Another object of the invention is to provide a cap that can be easily implemented using elements and materials that are readily available on the market.

This aim and these and other objects which will become better apparent hereinafter are all achieved by a cap according to claim 1.

Further characteristics and advantages of the invention will become better apparent from the description of a preferred, but not exclusive, embodiment of the cap according to the invention, which is illustrated by way of non-limiting example in the accompanying drawings wherein:
Figure 1 is a front elevation view of the cap according to the invention, mounted on a filler neck of a vehicle;
Figure 2 is a cross-sectional view of Figure 1, taken along the line II-II;
Figure 3 is a cross-sectional view of Figure 2, taken along the line III-III;
Figure 4 is a perspective view of the introduction of the nozzle of a fuel pump into the hole that is normally closed by the flap;
Figure 5 is a front elevation view of the elements of Figure 4;
Figure 6 is a cross-sectional view of Figure 5, taken along the line VI-VI;

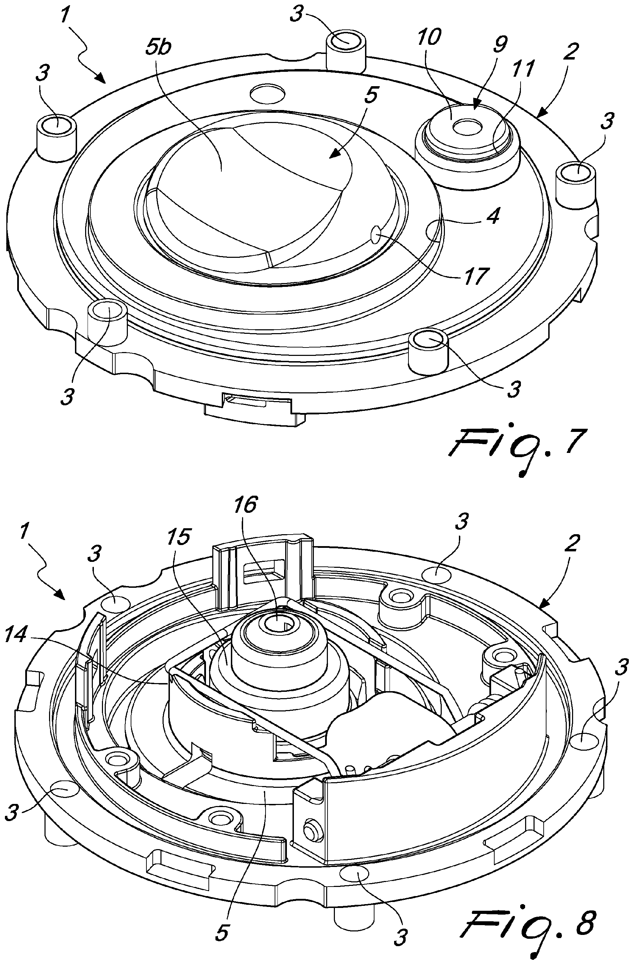

Figure 7 is a perspective view from above of the cap of Figure 1, without a covering component;
Figure 8 is a perspective view from below of the cap of Figure 7;
Figure 9 is a front elevation view of the cap of Figure 7;

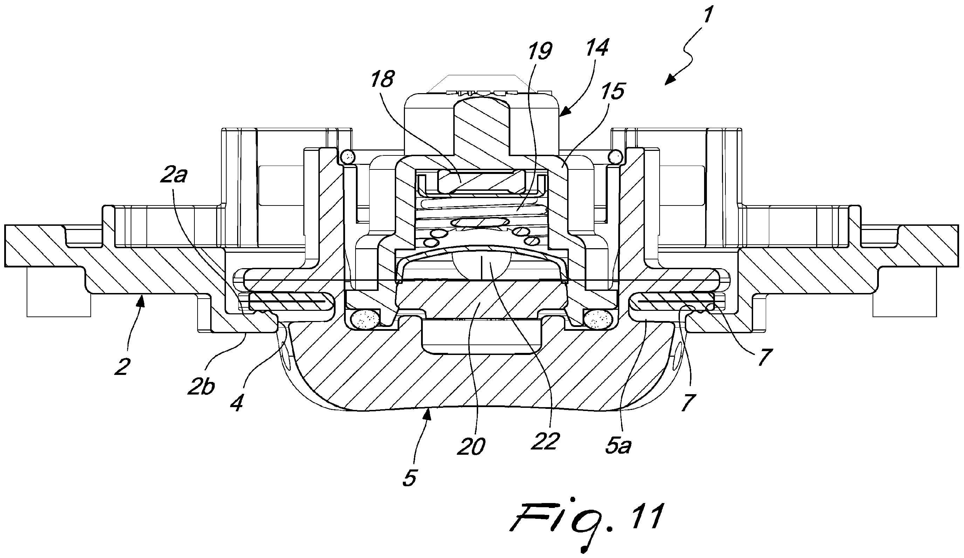

Figures 10-11 are cross-sectional views of Figure 9, taken respectively along the lines X-X and XI-XI;
Figure 12 is a front elevation view of the flange of the cap of Figure 1;
Figures 13-14 are cross-sectional views of Figure 12, taken respectively along the lines XIII-XIII and XIV-XIV;
Figure 15 is a view from behind of the flange of Figure 12;
Figure 16 is a greatly enlarged detail of Figure 13;
Figure 17 is a front elevation view of the flange of Figure 12 with some additional components;

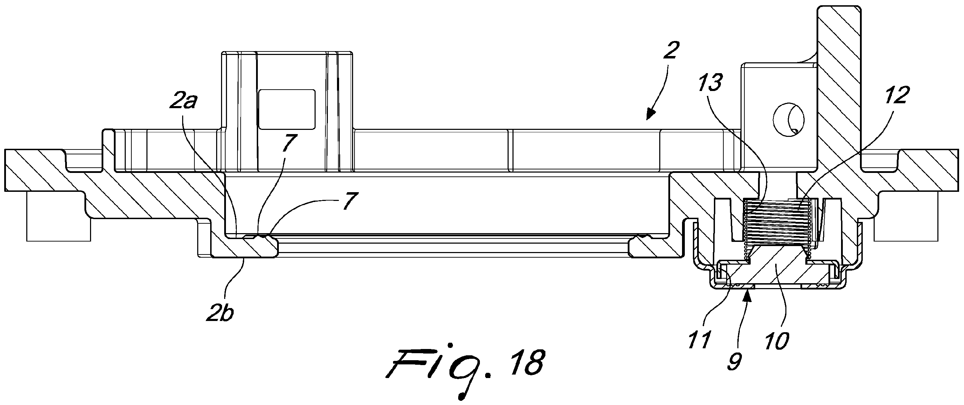

Figure 18 is a cross-sectional view of Figure 17, taken along the line XVIII- XVIII.

With particular reference to the figures, the reference numeral 1 generally designates a cap for fuel tanks of vehicles, which is configured to be coupled, in a respective active arrangement (during use), to a filler neck A of a vehicle.

Although the protection claimed herein relates firstly to a cap 1 sold individually, in the present discussion the expression "during use" and/or the concept of "active arrangement" identify the specific condition in which the cap 1 is coupled (using the methods described below) to the end portion of the filler neck A, so as to normally prevent any transit of material between inside and outside the tank (except for special conditions which will be described below).

In this regard, it should be noted from this point onward that the cap 1 is typically intended to close filler necks A of motor vehicles, such as automobiles, trucks, semi-trailer trucks, earth-moving machines and/or other large motor vehicles, but it can also be used for other types of vehicles, while remaining within the scope of protection claimed herein.

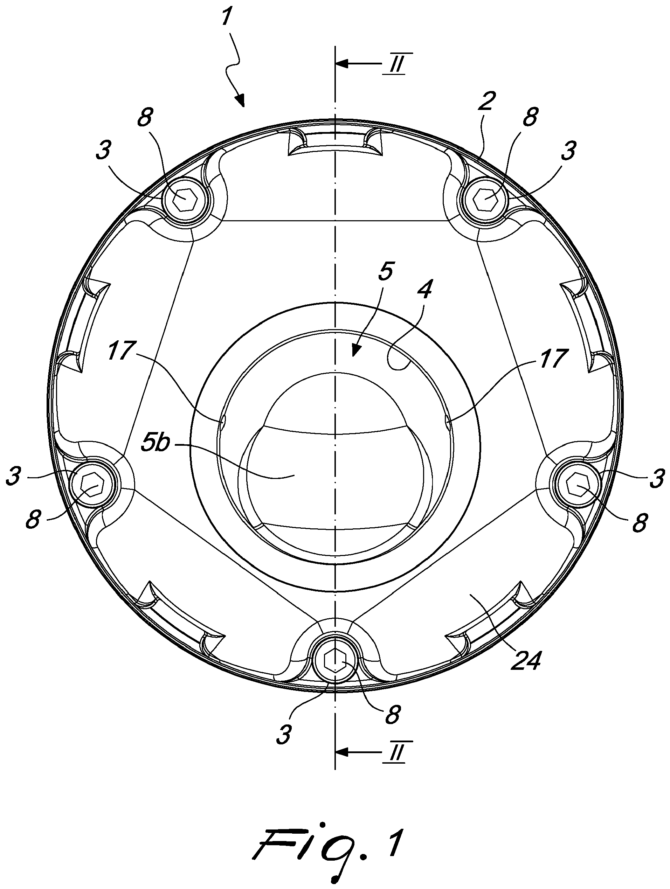

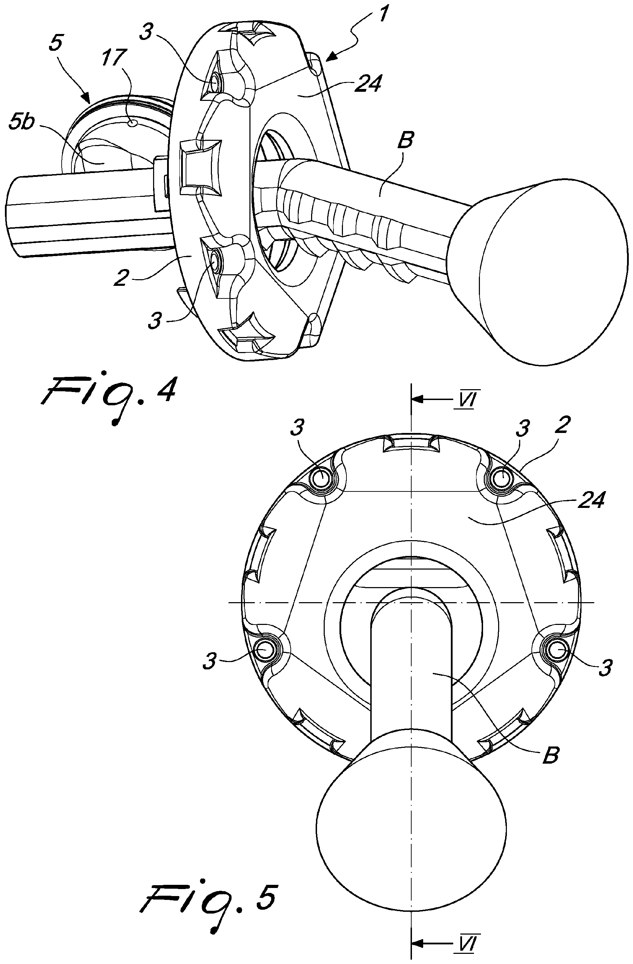

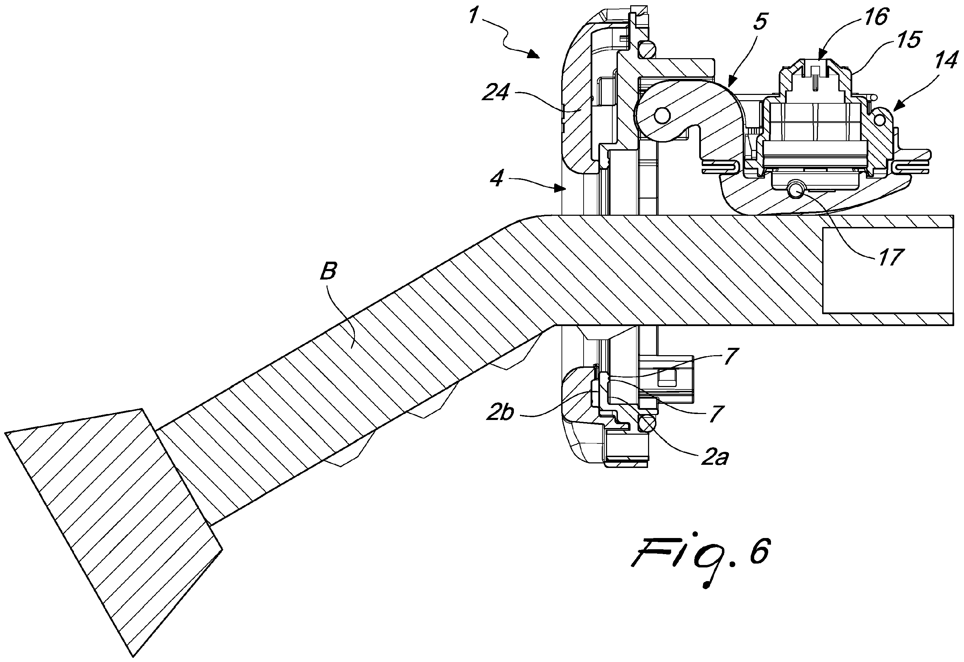

According to conventional methods, the filler neck A comprises a tube which is first of all open outward at a first end portion (the end portion visible in Figure 1): at the opposite end the tube leads into the tank of a vehicle and enables the refueling thereof, via the insertion into the filler neck A of a nozzle B for dispensing fuel (as in Figures 4-6).

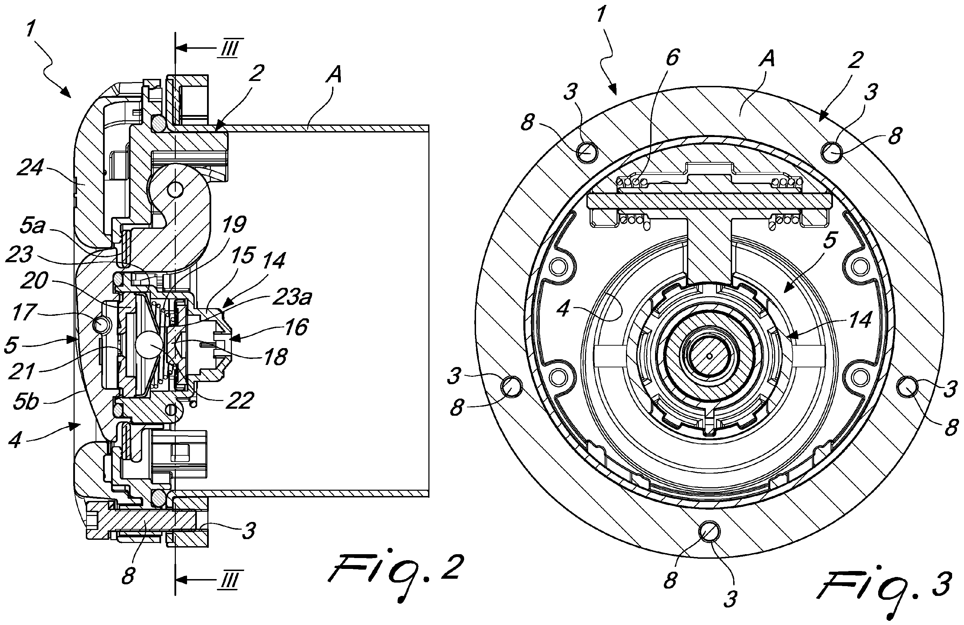

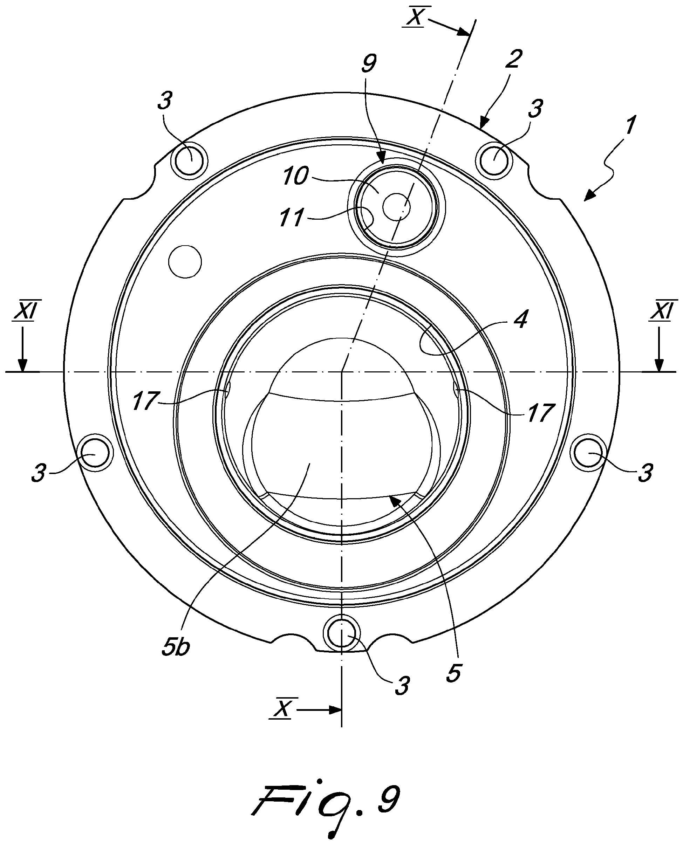

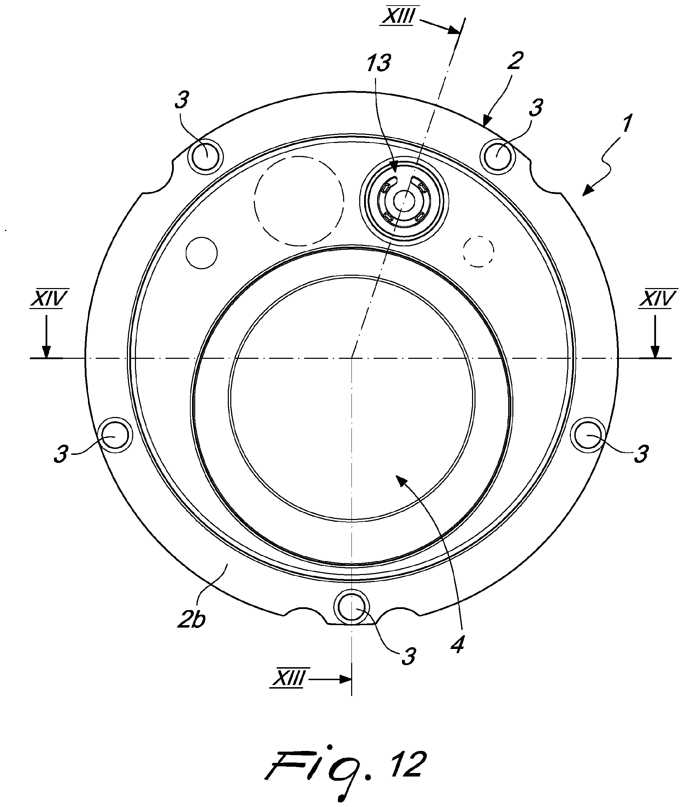

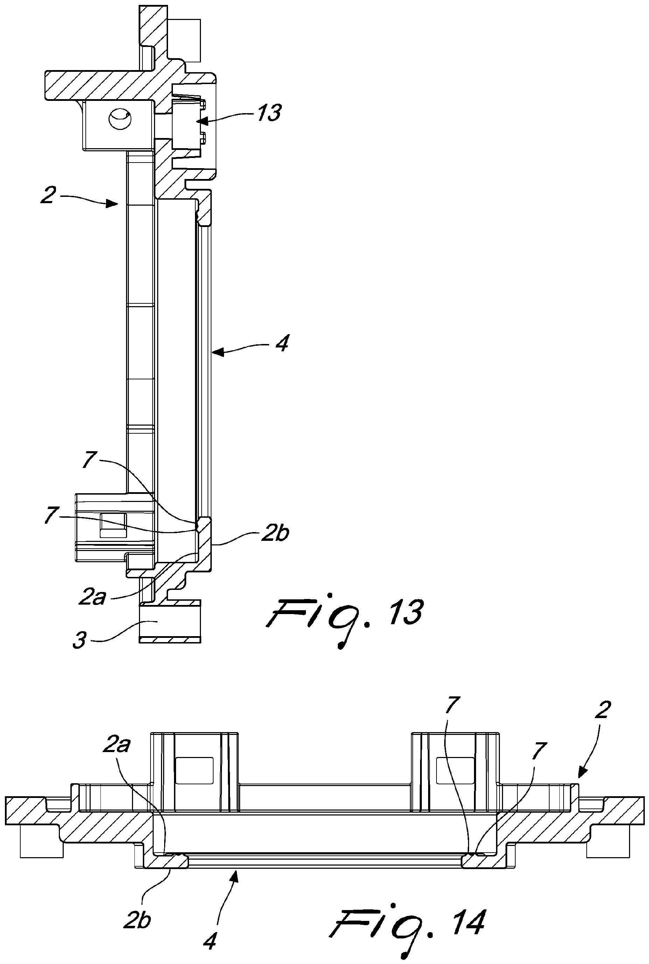

According to the invention, the cap 1 comprises at least one metallic flange 2 (the subject matter in particular of Figures 12-15), which is provided with means 3 for anchoring to the filler neck A and which defines a hole 4, which is configured for the passage of the nozzle B of the fuel pump. In specifying that the hole 4 is "configured" for the passage of the nozzle B, what is meant is that the arrangement and especially the shape and dimensions of the hole 4 are chosen so as to allow the introduction of the nozzle B (which normally has standard dimensions and shape, which are codified by international standards). In the active condition (during use), the cap 1 is therefore stably coupled to the filler neck A with the flange 2, by virtue of the means 3 for anchoring. Note that in some figures, the reference numeral "4" indicates the (empty) area that corresponds to the hole (Figures 2 or 12, for example), while in other figures only its edge is indicated (Figures 1 or 9, for example).

In particular, in the preferred embodiment the flange 2 is made of zama (which as is known is a family of zinc-based alloys, sometimes also called "zamak" or "zamac"), although the possibility is not ruled out of using different alloys or other metallic materials.

Furthermore, according to the invention, the cap 1 comprises at least one flap 5 which is elastically articulated to the flange 2 and which is normally arranged so as to close the hole 4. The "normal" condition corresponds to the non-deformed arrangement of an elastic element 6 (visible in Figure 3 and in any case conventional) which acts on the hinge-like coupling between the flap 5 and the flange 2 and which develops a constraining reaction that tends to keep the flap 5 closing the hole 4 (this reaction can be defeated by the pressure exerted by the nozzle B when the latter is pushed from outside onto the flap 5).

In the active arrangement, closing the filler neck A and therefore obstructing access to the tank are therefore ensured by the flap 5, which normally closes the hole 4.

In addition, according to the invention, at least one ridge 7 extends from a first face 2a of the flange 2 directed toward the flap 5, and extends along an ideal closed curve around the hole 4 and is configured for contact with the flap 5, in the active arrangement (and when the flap 5 closes the hole 4). In other words, and as the accompanying figures show, when the flap 5 closes the hole 4, the rim 5a of the flap 5 creates the seal by resting not directly against the first face 2a of the flange 2, but against at least one ridge 7 that extends from the latter (and which surrounds the hole 4).

It should be noted that the rim 5a (the portion of the flap 5 that rests against the ridges 7) can be constituted by a gasket or other elastically deformable component (U-shaped in the solution in the accompanying figures) which ensures the seal.

In particular, in order to ensure an even more effective seal, the cap 1 can comprise a plurality of ridges 7, which extend along respective ideal closed curves (without intersecting) around the hole 4.

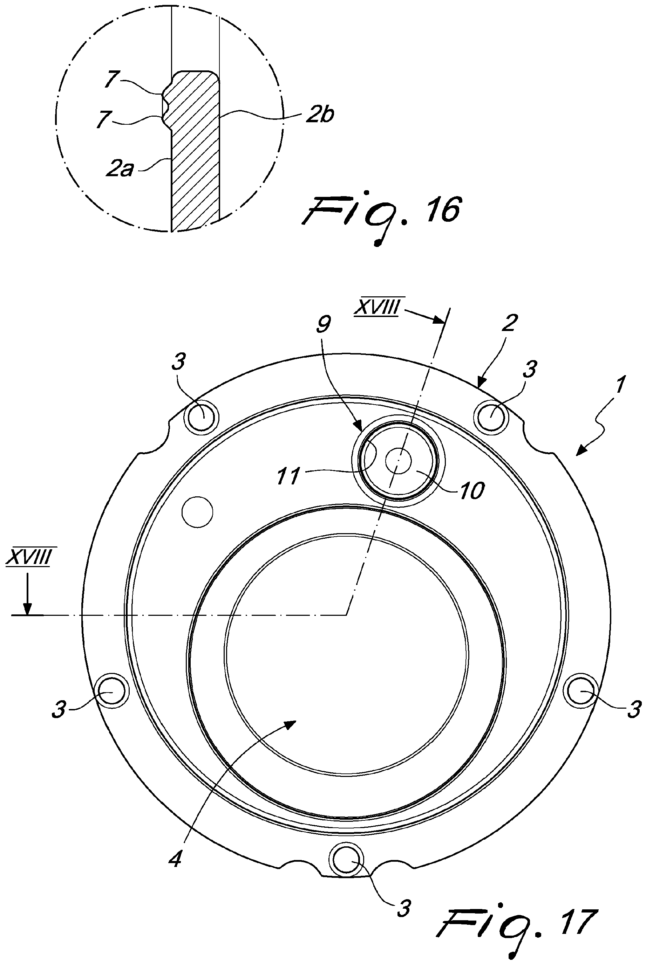

For example, it is considered that with two ridges 7, as in the accompanying figures (see in particular Figure 16), or with three ridges 7, an optimal result is arrived at, but in any case the possibility is not ruled out of choosing a higher number of ridges 7, according to the specific requirements.

Note that by using two or more ridges 7, a molding error or an accidental deformation that affects one ridge 7 does not in any way compromise the seal, which in fact is still ensured by the other ridges 7.

Usefully, in the preferred embodiment the ridge 7 extends along an ideal circular curve.

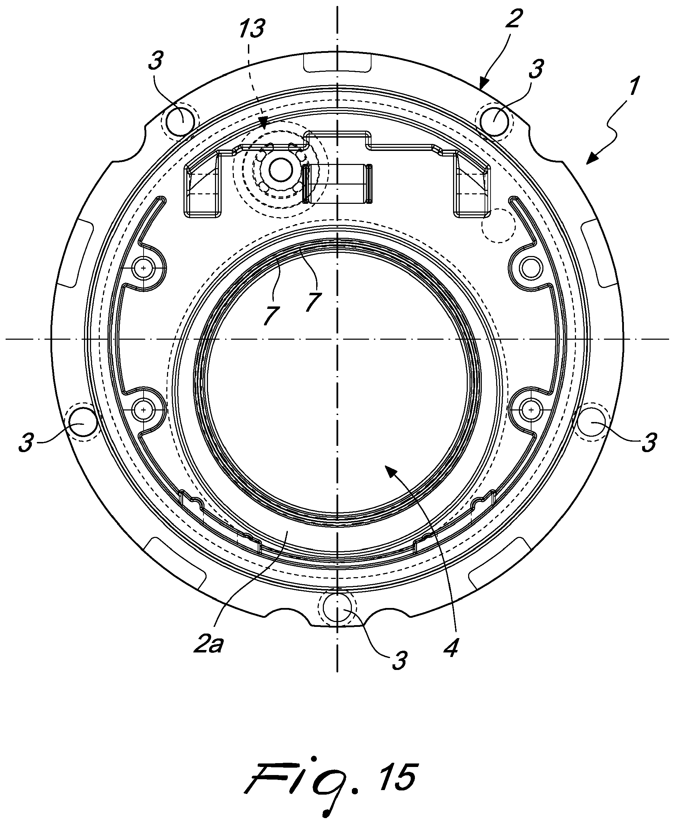

Even more specifically, the hole 4 is circular and all the ridges 7 are shaped like circular rings that are concentric (with each other and with the hole 4), as in the example in the accompanying figures (see in particular Figure 15).

It should be noted in any case that the shape of the hole 4 and of the ridges 7, and also the number thereof, can be chosen freely, while remaining within the scope of protection claimed herein.

In the embodiment illustrated in the accompanying figures for the purposes of non-limiting example of the invention, the means 3 for anchoring comprise a plurality of through orifices, which are distributed along the peripheral region of the flange 2 and are configured to receive respective tightening screws 8 (which can be supplied with the cap 1 or sourced separately).

It should be noted that the use of screws 8 and orifices of the type illustrated in the accompanying figures represents only one possible option: the possibility is not ruled out of using other permanent connecting elements (nails, rivets etc.) or other solutions for anchoring the flange 2 to the filler neck A, while remaining within the scope of protection claimed herein.

Usefully, the cap 1 can comprise at least one valve apparatus 9 for negative pressure, which is installed on the flange 2 and is configured to temporarily allow the introduction of air into the tank, obviously when the cap 1 is in the active arrangement (and without moving the flap 5), following a decrease of the pressure level inside the tank beyond a negative pressure limit threshold.

For example, the valve apparatus 9 makes it possible to introduce volumes of air corresponding to the volume of fuel consumed during the operation of the vehicle (up to a volume of air that corresponds to the maximum amount of fuel that can be consumed), in order to restore the nominal pressure level, thus meeting a need that is often expressed by the market.

In particular, in an embodiment of significant practical interest (illustrated in detail for example in Figure 9), the valve apparatus 9 comprises at least one first diaphragm 10, which is normally kept in a position to close an auxiliary opening 11 provided along the flange 2, next to the hole 4, by a respective first elastic element 12, which is accommodated in a recess 13 provided on the flange 2.

For example, as in the accompanying figures, the first elastic element 12 can be a compression spring, accommodated in (and guided by) the recess 13 so as to be kept interposed between the bottom of said recess and the first diaphragm 10 (but this does not rule out other embodiments, which in any case remain within the scope of protection claimed herein). A pressure reduction inside the tank ensures that the thrust exerted by the atmospheric air can reach the point where it defeats the constraining reaction of the first elastic element 12, which is compressed while the first diaphragm 10 is moved toward the bottom of the recess 13, thus allowing air to enter the tank through the auxiliary opening 11 (until the nominal pressure level is restored, which brings the first diaphragm 10 to close the auxiliary opening 11 again).

Advantageously, the cap 1 can comprise a valve assembly 14, which is mounted on the flap 5 and is configured to temporarily allow the exit of air from the tank, when the cap 1 is in the active arrangement, following an increase of the pressure level inside the tank beyond a positive pressure limit threshold.

It should be noted that in the event of an increase in the pressure level (which can happen in some circumstances), the (unwanted) phenomenon of spontaneous evaporation can arise inside the fuel tank. Likewise, the thrust exerted by the (higher-pressure) air against the walls of the tank, if not properly managed, can over time produce a bulge (even more unwanted) in those walls. However, the valve assembly 14 allows air to exit from the tank, thus producing a decrease in the pressure level below the positive pressure limit threshold and restoring an optimal operative condition.

In particular, in the embodiment of significant practical interest illustrated in the accompanying figures, the valve assembly 14 comprises a shell 15 applied to a first wall of the flap 5, which is configured to be directed toward the tank in the active arrangement (the valve assembly 14 is thus kept facing toward the tank, inside the end portion of the filler neck A on which the cap 1 is mounted).

The shell 15 is passed through by at least one through channel 16 which is arranged in communication with at least one vent 17 provided along the flap 5 (and in turn preferably facing outward); furthermore, the shell 15 also accommodates at least one second diaphragm 18 which is normally kept in a position to close the channel 16 by a respective second elastic element 19, which is stably accommodated in the shell 15.

As can clearly be seen from the accompanying figures, the second elastic element 19 is also preferably a spring, which is compressed when the pressure in the tank rises, in order to allow the second diaphragm 18 to be moved and so allow the temporary exit of air.

More specifically, the flap 5 comprises a contoured step 5b, which extends from a second wall of the flap 5, opposite to the first wall (and therefore intended to be kept facing outward): the vent 17 is preferably provided along a flank of this step 5b. Recalling that the flap 5 is typically arranged along a flank of the vehicle, this choice makes it possible to shelter the vent 17 from rain and from atmospheric agents, thus guarding against the danger of clogging and of introducing unwanted substances into the tank (or into the channel 16).

The number of vents 17 can be any: in the solution in the accompanying figures for example there are two vents 17, located along opposite flanks of the step 5b.

It should in any case be noted that the scope of protection claimed herein includes the possibility of routing the air that needs to exit from the tank (following an increase in the pressure level inside the tank beyond a positive pressure limit threshold) not directly outside but toward an additional component, for example an activated carbon filter, from which the air can then be finally emitted outside (this is required for example by regulations in the USA, to treat the gases exiting from the tank into the environment). In such case, the exit occurs preferably through the flange 2, conveniently modified.

Usefully, the valve assembly 14 comprises at least one baffle 20, which is arranged so as to close the channel 16 between the second diaphragm 18 and the flap 5: the baffle 20 has an opening 21 that can be closed by a respective closure element 22 (a ball for example), which is normally free to move in the channel 16 but which can automatically be arranged so as to close the opening 21, when the channel 16 is at least partially filled with liquid.

During use, the fuel does not reach the channel 16 (which, it must be recalled, is located effectively at the end portion of the filler neck A, at the other end with respect to the tank): in such condition therefore the opening 21 is not obstructed and it allows the transit of air into and out of the channel 16, which otherwise is stopped by the baffle 20. Conversely, in the event of the vehicle overturning (completely, i.e. 180°, or only partially), the tank can come to be at a higher vertical height than that of the cap 1; in this eventuality, by gravity the fuel can reach and flood the channel 16 and then, if it is not adequately blocked, exit from the cap 1 to the outside, through the vent 17. The exit is prevented by the closure element 22 which, by simple gravity or under the pressure of the fuel itself, in turn is brought toward the baffle 20, thus closing off the opening 21. In a practical and simple manner therefore, the valve assembly 14 ensures the observance of the regulations that require the adoption of measurements aimed at preventing the exit of fuel in the event of the vehicle overturning.

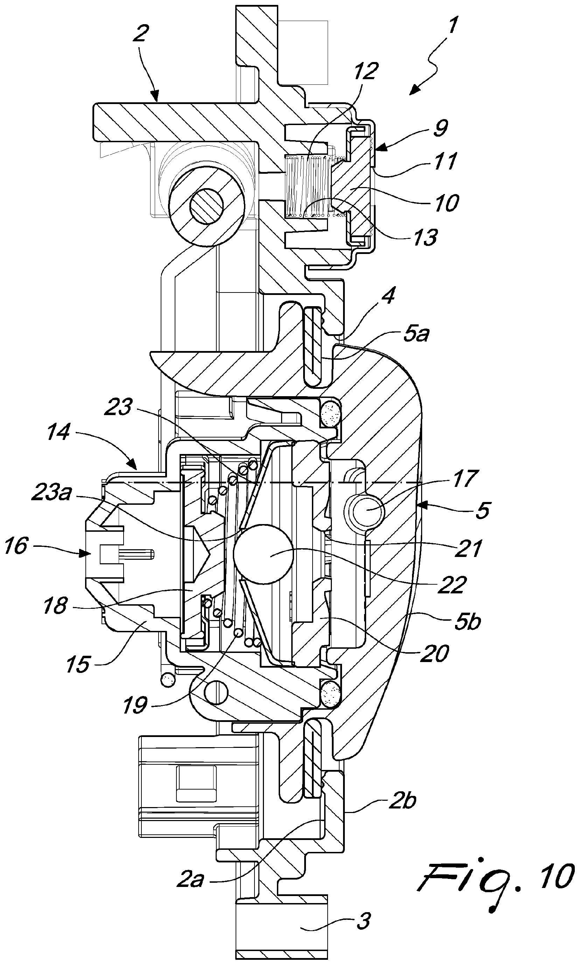

Preferably, as can be clearly seen for example from Figure 10, the closure element 22 is accommodated in a compartment of the channel 16, which is delimited by the baffle 20 and also by an additional bulkhead 23 (Figures 2 and 10), which is arranged along the channel 16 between the baffle 20 and the second diaphragm 18. The bulkhead 23 has a passage opening 23a of different shape and dimensions from those of the closure element 22.

The opening 23a allows the passage of air and liquids, and the choice to dimension it differently from the closure element 22 guards against the danger that the latter might accidentally occlude it (evidently, the dimensions of the opening 23a are chosen in any case to be smaller than those of the closure element 22).

It is emphasized that the cap 1 can be provided only with the valve apparatus 9 or only with the valve assembly 14 or with both; furthermore, the possibility is not ruled out of combining the functionality of the valve apparatus 9 in the valve assembly 14.

Usefully, the cap 1 comprises a covering lid 24, arranged to cover at least one portion of the second face 2b of the flange 2, opposite to the first face 2a. The lid 24 can be applied on the flange 2 for aesthetic reasons and/or in order to customize the appearance of the cap 1 (the lid 24 in fact remains visible to the user during the refueling, as in Figure 5), but in any case in such a way as not to obstruct the passage of the nozzle A and therefore without covering the flap 5.

The operation of the cap according to the invention is effectively evident from the foregoing description: during assembly of the vehicle, the cap 1 is stably anchored to the filler neck A with its flange 2, thus obtaining the active arrangement described in detail in the foregoing, and subsequently it obstructs access to the filler neck A itself for as long as the flap 5 closes off the hole 4. To carry out the refueling, according to methods that are known per se the user needs to grasp the nozzle B and, without removing the flange 2 (or the cap 1), press it against the flap 5, in so doing forcing its rotation inward in order to allow the introduction of the nozzle B into the filler neck A.

As already explained, when the flap 5 closes off the hole 4, the rim 5a rests against the ridges 7 that extend from the metallic flange 2 around that hole 4, and this enables the invention to achieve the set aim. In fact, by virtue of the innovative choice to make the flange 2 from zama or other metallic material, it is particularly resistant to the stress that for example develops during the step of anchoring to the end portion of the filler neck A (owing to the tightening obtained with the screws 8 or otherwise). Therefore, the flange 2 remains non-deformed and perfectly flat (in the portions affected by the coupling), or at least perfectly compliant with the design dimensions, which are of course chosen for an optimal seal. Note however that the flange 2 made of zama can be easily obtained by molding, with a solution therefore that is of low cost and simple to produce.

In this context, the choice to arrange one or more ridges 7 around the hole 4, with these ridges playing the role of seal (in that the flap 5 rests against them), cooperates with the choice to make the flange 2 of metallic material, in order to obtain a synergistic effect of undoubted interest. In fact, by conveniently dimensioning each ridge 7, it is possible to appreciably increase its resistance to stress, so reducing or eliminating the risk of deformations. The redundancy of ridges 7 (if it is decided to provide two or more thereof) is a further guarantee of optimal sealing, even in the event of dimensional deviations from the design values, which could arise for one of the ridges 7, for example as a consequence of shrinkage during the molding.

In practice it has been found that the cap 1 according to the invention fully achieves the set aim, in that the use of a flange 2 of zama or other metallic material, provided with one or more ridges 7, ensures the hermetic closure of the hole 4 by the flap 5.

It is precisely the choice to make the flange 2 of zama or other metallic material that gives the flange 2, i.e. the component that is subjected to the greatest stress as a result of its role in anchoring to the filler neck A, adequate properties of mechanical rigidity, in order to effectively prevent any deformations.

The ridges 7 accentuate the effect illustrated above, even in the event of dimensional deviations.

Furthermore, the cap 1 can be fitted, if needed by the specific requirements (and/or by any regulatory constraints), with a valve apparatus 9 and/or with a valve assembly 14, which give the cap 1 further useful functionalities, thus making it easily configurable according to the specific ventilation requirements of the tank.

In particular, as has been seen, the valve apparatus 9 makes it possible to compensate for any drops of pressure inside the tank, allowing the temporary entry of air, while the valve assembly 14 by contrast ensures the temporary exit of air, when the pressure inside the tank exceeds a positive pressure limit threshold. Furthermore, the valve assembly 14 can prevent the leakage of fuel in the event of the vehicle overturning.

The valve apparatus 9 and/or the valve assembly 14 (if present) are in turn mounted on the flange 2, and therefore on a rigid support made of metallic material capable of effectively supporting them, without undergoing deformations under their weight, therefore again confirming the efficacy of the invention.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A cap for fuel tanks of vehicles, which is configured for the coupling thereof, in a respective active arrangement, to a filler neck (A) of a vehicle, **characterized in that** it comprises at least:
- a metallic flange (2), which is provided with means (3) for anchoring to the filler neck (A) and which defines a hole (4) configured for the passage of a nozzle (B) of a fuel pump,
- a flap (5) which is elastically articulated to said flange (2) and is normally arranged so as to close said hole (4),
at least one ridge (7) extending from a first face (2a) of said flange (2) directed toward said flap (5), and extending along an ideal closed curve around said hole (4) and being configured for contact with said flap (5), in said active arrangement.

2. The cap according to claim 1, **characterized in that** said flange (2) is made of zama.

3. The cap according to claim 1 or 2, **characterized in that** it comprises a plurality of said ridges (7), extending along respective ideal closed curves around said hole (4).

4. The cap according to one or more of the preceding claims, **characterized in that** said at least one ridge (7) extends along an ideal circular curve.

5. The cap according to one or more of the preceding claims, **characterized in that** said means (3) comprise a plurality of through orifices, which are distributed along the peripheral region of said flange (2) and are configured for the insertion of respective tightening screws (8).

6. The cap according to one or more of the preceding claims, **characterized in that** it comprises a valve apparatus (9), which is installed on said flange (2) and is configured to temporarily allow the introduction of air into the tank, in said active arrangement, following a decrease of the pressure level inside the tank beyond a negative pressure limit threshold.

7. The cap according to one or more of the preceding claims, **characterized in that** said valve apparatus (9) comprises at least one first diaphragm (10), which is normally kept in a position to close an auxiliary opening (11) provided along said flange (2), next to said hole (4), by a respective first elastic element (12), which is accommodated in a recess (13) provided on said flange (2).

8. The cap according to one or more of the preceding claims, **characterized in that** it comprises a valve assembly (14), which is mounted on said flap (5) and is configured to temporarily allow the exit of air from the tank, in said active arrangement, following an increase of the pressure level inside the tank beyond a positive pressure limit threshold.

9. The cap according to claim 8, **characterized in that** said valve assembly (14) comprises a shell (15) applied to a first wall of said flap (5), which is configured to be directed toward the tank in said active arrangement, said shell (15) being passed through by at least one through channel (16) which is arranged in communication with at least one vent (17) provided along said flap (5), said shell (15) accommodating at least one second diaphragm (18) which is normally kept in a position to close said channel (16) by a respective second elastic element (19), which is stably accommodated in said shell (15).

10. The cap according to claim 9, **characterized in that** said flap (5) comprises a contoured step (5b), extending from a second wall of said flap (5), opposite to said first wall, said at least one vent (17) being provided along a flank of said step (5b).

11. The cap according to claim 9 or 10, **characterized in that** said second valve assembly (14) comprises at least one baffle (20) which is arranged so as to close said channel (16) between said second diaphragm (18) and said flap (5), said baffle (20) having an opening (21) that can be opened and closed by a respective closure element (22) which is normally free to move in said channel (16) and can automatically be arranged so as to close said opening (21), when said channel (16) is at least partially filled with liquid.

12. The cap according to claim 11, **characterized in that** said closure element (22) is accommodated in a compartment of said channel (16), which is delimited by said baffle (20) and by an additional bulkhead (23) which is arranged along said channel (16) between said baffle (20) and said second diaphragm (18) and has a passage opening (23a) of different shape and dimensions from those of said closure element (22).

13. The cap according to one or more of the preceding claims, **characterized in that** it comprises a covering lid (24), arranged to cover at least one portion of the second face (2b) of said flange (2), opposite to said first face (2a).
